(19) Europäisches Patentamt
European Patent Office
Office européen des brevets

(11) **EP 3 058 547 B1**

(12) # EUROPÄISCHE PATENTSCHRIFT

(45) Veröffentlichungstag und Bekanntmachung des Hinweises auf die Patenterteilung:
**23.03.2022 Patentblatt 2022/12**

(21) Anmeldenummer: **14784204.1**

(22) Anmeldetag: **02.10.2014**

(51) Internationale Patentklassifikation (IPC):
**G06T 3/40** *(2006.01)* **G06F 3/14** *(2006.01)*

(52) Gemeinsame Patentklassifikation (CPC):
**G06F 3/1438; G06T 3/4092; B60K 2370/52;**
G09G 2340/0407; G09G 2340/145; G09G 2380/10

(86) Internationale Anmeldenummer:
**PCT/EP2014/071166**

(87) Internationale Veröffentlichungsnummer:
**WO 2015/055440 (23.04.2015 Gazette 2015/16)**

(54) **VERFAHREN UND ANORDNUNG ZUR DARSTELLUNG EINES ANZEIGEELEMENTS**

METHOD AND ARRANGEMENT FOR PRESENTING A DISPLAY ELEMENT

PROCÉDÉ ET ENSEMBLE DE REPRÉSENTATION D'UN ÉLÉMENT D'AFFICHAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.10.2013 DE 102013221086**

(43) Veröffentlichungstag der Anmeldung:
**24.08.2016 Patentblatt 2016/34**

(73) Patentinhaber: **Volkswagen Aktiengesellschaft**
**38440 Wolfsburg (DE)**

(72) Erfinder:
• **LÜNNEMANN, Patrik**
**10553 Berlin (DE)**
• **SEUBERT, Christopher**
**10247 Berlin (DE)**

(56) Entgegenhaltungen:
**WO-A1-2013/135815 US-A1- 2004 046 772**
**US-A1- 2009 209 198**

• **FENG YUAN: "Chapter 5. Graphics Device Abstraction", INTERNET CITATION, 22. Dezember 2000 (2000-12-22), Seiten 1-10, XP007905479, ISBN: 978-0-13-086985-2 Gefunden im Internet: URL:http://proquest.safaribooksonline.com/ 0130869856/pref01 [gefunden am 2008-08-20]**
• **"Module 4: The Graphics Device Interface (GDI), Colors, and Fonts", , 14. April 2006 (2006-04-14), XP055161494, Gefunden im Internet: URL:http://www.tenouk.com/download/pdf/vis ualcplusmfc4.pdf [gefunden am 2015-01-12]**
• **Anonymous: "Supporting Multiple Screens | Android Developers", , 17 May 2011 (2011-05-17), XP055188255, Retrieved from the Internet: URL:http://developer.android.com/guide/pra ctices/screens_support.html [retrieved on 2015-05-08]**

**Beschreibung**

Die Erfindung betrifft ein Verfahren und eine Anordnung zur Darstellung eines Anzeigeelements auf mindestens einer fahrzeugseitigen Anzeigeeinrichtung.

In Fahrzeugen, insbesondere Kraftfahrzeugen, können Anzeigeeinrichtungen zur Anzeige von Informationen vorhanden oder verbaut sein. Derartige Anzeigeeinrichtungen können beispielsweise Teil eines Fahrzeugs-Infotainment-Systems sein, durch welches dem Fahrzeugführer und gegebenenfalls weiteren Fahrzeuginsassen Informationen visuell dargestellt werden können.

In der Regel werden Steuerdaten oder -signale zur Darstellung der Anzeigeelemente, die auf der fahrzeugseitigen Anzeigeeinrichtung dargestellt werden sollen, von mindestens einem fahrzeugseitigen Steuergerät bereitgestellt, wobei eine Ansteuerung der Anzeigeeinrichtung entsprechend den anzuzeigenden Anzeigeelementen erfolgen kann.

Weit verbreitet ist zudem der Einsatz von mobilen Endgeräten, z.B. von Mobiltelefonen, sogenannten Tablet-Computern, portablen Navigationsgeräten und weiteren Endgeräten.

Auch ist es bekannt, Daten zur Darstellung von Anzeigeelementen auf einer endgeräteseitigen Anzeigeeinrichtung an das Fahrzeug zu übertragen und dann die entsprechenden Anzeigeelemente auf der fahrzeugseitigen Anzeigeeinrichtung darzustellen. Beispielsweise kann ein Bildschirminhalt eines mobilen Endgerätes auf einem im Fahrzeug verbauten Bildschirm dargestellt werden. Dies ist z.B. mittels der bekannten MirrorLink-Technik möglich.

Die WO 2013/048168 A2 offenbart ein Verfahren zur Bereitstellung eines fahrzeugseitigen Identifikationsdienstes auf einer sogenannten Head-Unit. Hierbei offenbart die Druckschrift, dass eine Head-Unit-Einrichtung einen Bildschirm, der auf einem zweiten Bildschirm eines mobilen Geräts dargestellt wird, über eine VNC-Kommunikation empfängt und den Bildschirminhalt einem Benutzer anzeigt.

Die DE 10 2001 112 445 A1 offenbart ein Verfahren zum Darstellen einer Anwendung in einem Fahrzeug, wobei Daten zur Darstellung einer Anwendung auf einem Bildschirm bereitgestellt werden. Die Druckschrift offenbart hierbei, dass eine Multifunktionsbedieneinrichtung auch Daten zur Darstellung einer Anwendung von einem mobilen Gerät, beispielsweise einem Mobiltelefon, empfangen kann. Weiter kann ein Steuergerät und/oder die Multifunktionsbedieneinrichtung in Abhängigkeit von einer Größe des Bildschirms die tatsächliche dargestellte Größe der Benutzerschnittstellenelemente bestimmen. Hierbei ist jedoch das Steuergerät und die Multifunktionsbedieneinrichtung fahrzeugseitig angeordnet.

Die WO 2013/135815 A1 offenbart ein Verfahren zum Projizieren einer für einen Bildschirm eines Mobilgerätes vorgesehenen Benutzeroberfläche eines in dem Mobilgerät ablaufenden Anwendungsprogrammes auf einen Bildschirm eines in einem Fahrzeug angeordneten Infotainmentsystems.

Die US 2009/209198 A1 offenbart ein tragbares Gerät und eine Schnittstellenvorrichtung für einen entfernten Ressourcenzugriff für ein tragbares Gerät.

Die US 2004/046772 A1 offenbart ein Bildwiedergabegerät und eine Verfahren zur Steuerung des Bildwiedergabegeräts.

Die Druckschrift "Feng Yuan: Chapter 5. Graphics Device Abstraction, Internet Citation, 22.12.2000, Seiten 1-10, XP007905479, ISBN: 978-0-13-086985-2, gefunden im Internet: URL:http://proquest.safaribooksonline.com/0130869856/pref01" offenbart Mechanismen der Graphikgerätabstraktion.

Die Druckschrift "Module 4: The Graphics Device Interface (GDI), Colors, and Fonts, 14.04.2016, XP055161494, gefunden im Internet: URL: http://tenouk.com/download/pdf/visualcplusmfc4.pdf" offenbart Informationen über ein GDI.

Die Druckschrift "Anonymous: "Supporting Multiple Screens I Android Developers, 17. Mai 2011, XP055188255, gefunden im Internet: URL:http://developer.android.com/guide/practices/screens_support.html [gefunden am 2015-05-08]" beschreibt die Unterstützung verschiedener Bildschirme.

Es stellt sich das technische Problem, ein Verfahren und eine Anordnung zur Darstellung eines Anzeigeelements auf mindestens einer fahrzeugseitigen Anzeigeeinrichtung zu schaffen, wobei Daten zur Darstellung des Anzeigeelements derart erzeugt und übertragen werden, dass eine Darstellung des Anzeigeelements einheitlich auf mehreren Anzeigeeinrichtungen, insbesondere mit verschiedenen Größen, erfolgen kann. Die Lösung des technischen Problems ergibt sich durch die Gegenstände mit den Merkmalen der Ansprüche 1 und 8. Weitere vorteilhafte Ausgestaltungen der Erfindung ergeben sich aus den Unteransprüchen.

Vorgeschlagen wird ein Verfahren zur Darstellung eines Anzeigeelements auf mindestens einer fahrzeugseitigen Anzeigeeinrichtung. Die fahrzeugseitige Anzeigeeinrichtung bezeichnet hierbei eine in einem Fahrzeug, insbesondere in einem Innenraum des Fahrzeugs, angeordnete oder fest verbaute Anzeigeeinrichtung. Diese kann beispielsweise als Bildschirm ausgebildet sein oder einen solchen umfassen.

Ein Anzeigeelement bezeichnet hierbei ein auf der Anzeigeeinrichtung grafisch darstellbares Element, welches einem Beobachter visuell Informationen vermittelt. Der Begriff Anzeigeelement schließt hierbei nicht aus, dass das Anzeigeelement auch als Bedienelement ausgebildet sein kann oder ein solches darstellt. Ein Bedienelement bezeichnet hierbei ein Element, bei dessen Betätigung, beispielsweise über ein entsprechendes Eingabemittel, mindestens eine vorbestimmte Funktion ausgelöst oder ausgeführt wird. So ist es z.B. vorstellbar, dass die fahrzeugseitige Anzeigeeinrichtung als so genannter Touchscreen ausgebildet ist, der eine Betätigung von Bedienelementen durch Berühren des Touchscreens im Bereich des dargestellten Bedienelements ermöglicht.

Daten zur Darstellung des Anzeigeelements werden von einem Endgerät bereitgestellt. Hierbei bezeichnen die Daten zur Darstellung Daten, die die grafische Darstellung des Anzeigeelements codieren. In Abhängigkeit dieser Daten kann beispielsweise eine Steuereinrichtung die Anzeigeeinrichtung derart steuern, dass das gewünschte Anzeigeelement auf der Anzeigeeinrichtung dargestellt wird. Daten zur Darstellung können somit auch als Steuersignale bezeichnet werden.

Das Endgerät bezeichnet hierbei ein von dem Fahrzeug baulich getrennt ausgebildetes Endgerät. Die endgeräteseitige Bereitstellung bedeutet hierbei, dass die Daten zur Darstellung des Anzeigeelements z.B. durch eine Recheneinrichtung, beispielsweise eine Grafikkarte, des Endgeräts erzeugt werden. Die Daten zur Darstellung können hierbei unverändert zur Darstellung des Anzeigeelements auf der fahrzeugseitigen Anzeigeeinrichtung verwendet werden. Unverändert bedeutet hierbei, dass die Daten, die vom Endgerät erzeugt wurden, z.B. von einer entsprechenden Steuereinrichtung unmittelbar und unverändert zur Ansteuerung der fahrzeugseitigen Anzeigeeinrichtung genutzt werden können. Insbesondere können in den Daten zur Darstellung enthaltene oder kodierte Informationen zur Darstellungsgröße unverändert zur Ansteuerung der fahrzeugseitigen Anzeigeeinrichtung genutzt werden.

Weiter wird eine Datenverbindung zwischen dem Endgerät und dem Fahrzeug, insbesondere der fahrzeugseitigen Anzeigeeinrichtung und/oder deren Steuereinrichtung, hergestellt. Dann werden Daten zur Darstellung des Anzeigeelements von dem Endgerät zum Fahrzeug, insbesondere zur fahrzeugseitigen Anzeigeeinrichtung, übertragen. Dies umfasst, dass die Daten zur Darstellung über entsprechende Sende- und Empfangseinrichtungen und gegebenenfalls entsprechende Steuereinrichtungen zur Ansteuerung der fahrzeugseitigen Anzeigeeinrichtung an die fahrzeugseitige Anzeigeeinrichtung bzw. an eine Steuereinrichtung der Anzeigeeinrichtung übertragen werden. So können die Daten beispielsweise über eine endgeräteseitige Sendeeinrichtung an eine fahrzeugseitige Empfangseinrichtung übertragen werden, wobei die empfangenen Daten zu einer Steuereinrichtung des Fahrzeugs übertragen werden, wobei die Steuereinrichtung auf Grundlage oder in Abhängigkeit der übertragenen Daten die fahrzeugseitige Anzeigeeinrichtung derart ansteuert, dass das gewünschte Anzeigeelement dargestellt wird.

Weiter werden Größeninformationen über eine Größe der fahrzeugseitigen Anzeigeeinrichtung an das Endgerät übertragen. Die Größeninformationen können hierbei zeitlich vor der Übertragung der Daten zur Darstellung von dem Fahrzeug an das Endgerät übertragen werden. Die Größe bezeichnet hierbei eine physikalische Größe. So kann z.B. eine (physikalische) Breite und eine (physikalische) Höhe der fahrzeugseitigen Anzeigeeinrichtung mittels der Größeninformationen an das Endgerät übertragen werden. Die Einheit der physikalischen Größe kann beispielsweise in mm angegeben werden.

Endgeräteseitig werden die Daten zur Darstellung des Anzeigeelements in Abhängigkeit der übertragenen Größeninformationen bereitgestellt. Somit werden also die Daten zur Darstellung endgeräteseitig in Abhängigkeit der übertragenen Größeninformationen erzeugt. In anderen Worten bedeutet dies, dass eine Anpassung des anzuzeigenden Anzeigeelements, insbesondere eine Anpassung einer Größe bzw. Darstellungsgröße des anzuzeigenden Anzeigeelements, nicht fahrzeugseitig, sondern endgeräteseitig erfolgt.

Die Informationen zur Darstellung auf der fahrzeugseitigen Anzeigeeinrichtung werden also endgeräteseitig gerendert oder berechnet.

Dies vereinfacht in vorteilhafter Weise eine Darstellung eines z.B. bei einer Durchführung eines endgeräteseitig durchgeführten Programms darzustellenden Anzeigeelements auf der fahrzeugseitigen Anzeigeeinrichtung. Durch die endgeräteseitige Erzeugung der Daten zur Darstellung auf der fahrzeugseitigen Anzeigeeinrichtung wird nämlich in vorteilhafter Weise eine zentrale Erzeugung ermöglicht, wobei die Daten dann bereits zur Darstellung auf einer entsprechenden vom Endgerät verschiedenen Anzeigeeinrichtung angepasst sind.

Weiter ist dem Anzeigeelement endgeräteseitig eine vorbestimmte dichteunabhängige Pixelanzahl zugeordnet. Eine dichteunabhängige Pixelanzahl bezeichnet hierbei eine von einer Punktdichte der Anzeigeeinrichtung unabhängige Größe, wobei in Abhängigkeit der dichteunabhängigen Pixelanzahl sichergestellt werden kann, dass Anzeigeelemente unabhängig von einer Größe und Auflösung verschiedener Anzeigeeinrichtungen auf diesen Anzeigeeinrichtungen dargestellt werden können. Ein punktdichteunabhängiger Pixel kann beispielsweise als Größe einer Fläche eines gedachten Pixels definiert werden, deren Größe wiederum selbst definiert werden kann und als Vergleichswert dienen kann.

Hierbei kann dem Anzeigeelement endgeräteseitig eine dichteunabhängige Pixelanzahl in horizontaler und/oder vertikaler Bildrichtung zugeordnet sein. Das Anzeigeelement mit der ihm zugeordneten dichteunabhängigen Pixelanzahl kann hierbei auch auf einer endgeräteseitigen Anzeigeeinrichtung dargestellt werden. Somit kann die dichteunabhängige Pixelanzahl des Anzeigeelements insbesondere durch oder für mindestens eine endgeräteseitige Anwendung vorgegeben sein. Z.B. kann ein Applikationsentwickler eine Applikation für das Endgerät entwickeln. Für die im Rahmen dieser endgeräteseitigen Applikation benötigten Anzeigeelemente kann die Grösse von endgeräteseitig anzuzeigenden Anzeigeelementen in Abhängigkeit von dichteunabhängigen Pixeln vorgeben werden. Hierdurch legt man jedoch auch in vorteilhafter Weise fest, mit welcher physikalischen Größe die Anzeigeelemente auf verschiedenen Anzeigeeinrichtungen dargestellt werden sollen.

Erfindungsgemäß wird dann die absolute Pixelanzahl des auf der fahrzeugseitigen Anzeigeeinrichtung darzustellenden Anzeigeelements in Abhängigkeit der dichteunabhängigen Pixelanzahl und der übertragenen Größeninformation bestimmt.

Hierdurch ergibt sich in vorteilhafter Weise, dass einem Benutzer ein Anzeigeelement mit der ihm vom Endgerät bekannten Darstellungsgröße auf der fahrzeugseitigen Anzeigeeinrichtung angezeigt wird. Hierdurch lässt sich in vorteilhafter Weise mittels eines einfach implementierbaren Verfahrens eine Darstellung von Anzeigeelementen, deren Daten zur Darstellung von einem Endgerät bereitgestellt werden, mit einer gewünschten Größe auf der fahrzeugseitigen Anzeigeeinrichtung erreichen. Insbesondere kann ein Applikationsentwickler bei der Entwicklung bereits erforderliche Mindestgrößen für die Anzeige des Anzeigeelements auf einer fahrzeugseitigen Anzeigeeinrichtung berücksichtigen und die dichteunabhängige Pixelanzahl entsprechend festlegen. Dies dient einer benutzerfreundlichen und sicheren Nutzung während eines Betriebes des Fahrzeugs. Bei der Darstellung von endgeräteseitig gestellten Anzeigeelementen auf einer fahrzeugseitigen Anzeigeeinrichtung müssen für diese Mindestgröße jedoch in der Regel eine Vielzahl von Faktoren berücksichtigt werden, u.a. eine Auflösung der Anzeigeeinrichtung des Endgeräts, eine Auflösung und Größe der fahrzeugseitigen Anzeigeeinrichtung, ein Größenverhältnis des Anzeigeelements zur endgeräteseitigen Anzeigeeinrichtung und ein Seitenverhältnis von endgeräteseitiger und fahrzeugseitiger Anzeigeeinrichtung. Die Vorgabe von dichteunabhängigen Pixelanzahlen für ein Anzeigeelement vereinfachen hierbei die Erzeugung der Daten zur Darstellung.

In einer bevorzugten Ausführungsform wird die absolute Pixelanzahl in Abhängigkeit der dichteunabhängigen Pixelanzahl, einer Referenzskalierungsgröße und einem Auflösungs-Größe-Verhältnis bestimmt.

Die Referenzskalierungsgröße bezeichnet hierbei eine für einen Standard der dichteunabhängigen Pixel fest vorgegebene Zahl. So ist es z.B. bei der Anzeige von Anzeigeelementen in Android-Betriebssystemen üblich, die Referenzskalierungsgröße gleich 160 zu wählen. Selbstverständlich kann jedoch, je nach Standard, die Referenzskalierungsgröße auch einen anderen Wert annehmen. Wesentlich ist jedoch, dass die Referenzskalierungsgröße für ein Endgerät oder ein Betriebssystem fest vorgegeben und nicht veränderlich ist.

Das Auflösungs-Größe-Verhältnis ist ein Verhältnis zwischen einer Auflösung einer endgeräteseitigen Anzeigeeinrichtung und der Größe der fahrzeugseitigen Anzeigeeinrichtung.

Beispielsweise kann die absolute Pixelanzahl gemäß

$$px = (dp/160)\ dpi\_EF \qquad \text{Formel 1}$$

bestimmt werden, wobei px die absolute Pixelanzahl, dp die vorbestimmte dichteunabhängige Pixelanzahl und dpi_EF das Auflösungs-Größe-Verhältnis bezeichnet. Hierbei ist als Referenzskalierungsgröße der Wert 160 gewählt.

Das Auflösungs-Größe-Verhältnis kann gemäß

$$dpi\_EF = (A\_E/G\_F) \qquad \text{Formel 2}$$

berechnet werden, wobei A_E die Auflösung der endgeräteseitigen Anzeigeeinrichtung und G_F eine physikalische Größe des Fahrzeugbildschirms bezeichnet. Das Auflösungs-Größe-Verhältnis kann auch als virtuelle Dichte der fahrzeugseitigen Anzeigeeinrichtung bezeichnet werden.

Hierdurch ergibt sich in vorteilhafter Weise eine einfache Berechnung der absoluten Pixelanzahl zur Darstellung des Anzeigeelements auf der fahrzeugseitigen Anzeigeeinrichtung.

In einer weiter bevorzugten Ausführungsform wird das Auflösungs-Größe-Verhältnis als ein Verhältnis zwischen einer vertikalen Auflösung der endgeräteseitigen Anzeigeeinrichtung und der Höhe der fahrzeugseitigen Anzeigeeinrichtung bestimmt. Die Höhe bezeichnet hierbei eine physikalische Größe. Diese Bestimmung erfolgt, falls ein Verhältnis der Breite zur Höhe der endgeräteseitigen Anzeigeeinrichtung kleiner als ein Verhältnis der Breite zur Höhe der fahrzeugseitigen Anzeigeeinrichtung ist. Breite und Höhe bezeichnen hierbei physikalische Größen. Die vertikale Auflösung kann eine Auflösung in vertikaler Bildrichtung bezeichnen.

In einer weiteren Ausführungsform wird das Auflösungs-Größe-Verhältnis als ein Verhältnis zwischen einer horizontalen Auflösung der endgeräteseitigen Anzeigeeinrichtung und der Breite der fahrzeugseitigen Anzeigeeinrichtung bestimmt, falls ein Verhältnis der Breite zur Höhe der endgeräteseitigen Anzeigeeinrichtung größer als ein oder gleich einem Verhältnis der Breite zur Höhe der fahrzeugseitigen Anzeigeeinrichtung ist. Die horizontale Auflösung kann eine Auflösung in horizontaler Bildrichtung bezeichnen.

Somit ergibt sich in vorteilhafter Weise, dass das Auflösungs-Größe-Verhältnis ein Seitenverhältnis zwischen der endgeräteseitigen und fahrzeugseitigen Anzeigeeinrichtung berücksichtigt.

Insbesondere kann die Berücksichtigung dazu führen, dass, wenn die fahrzeugseitige Anzeigeeinrichtung kleiner als die endgeräteseitige Anzeigeeinrichtung ist, die auf der endgeräteseitigen Anzeigeeinrichtung dargestellten Anzeigeelemente vergrößert werden. Insgesamt ergibt sich jedoch, dass die auf der fahrzeugseitigen Anzeigeeinrichtung dargestellten Anzeigeelemente mit einer gewünschten Größe dargestellt werden. Hierdurch wiederum ergibt sich eine vom Entwickler gewünschte Darstellung mit der gewünschten Größe in horizontaler und vertikaler Richtung.

In einer weiteren Ausführungsform ist das Endgerät ein mobiles Endgerät, insbesondere ein portables Endgerät. Vorzugsweise ist das Endgerät ein Mobiltelefon.

Hierdurch können in vorteilhafter Weise Anzeigeelemente, die z.B. im Rahmen von Applikationen auf dem Mobiltelefon zur Anzeige gebracht werden, mit einer gewünschten Größe auf der fahrzeugseitigen Anzeigeeinrichtung dargestellt werden, wobei eine Bestimmung der absoluten Pixelanzahl zur Anzeige auf der fahrzeugseitigen Anzeigeeinrichtung vereinfacht ist.

In einer weiteren Ausführungsform wird das Anzeigeelement zeitgleich auf einer endgeräteseitigen Anzeigeeinrichtung dargestellt. Hierbei kann die absolute Pixelanzahl des auf der endgeräteseitigen Anzeigeeinrichtung dargestellten Anzeigeelements der absoluten Pixelanzahl des auf der fahrzeugseitigen Anzeigeeinrichtung dargestellten Anzeigeelements entsprechen. Dies kann unter Umständen zur Anzeige der Anzeigeelemente mit verschiedenen Größen auf den verschiedenen Anzeigeeinrichtungen führen. Jedoch ergibt sich in vorteilhafter Weise, dass nur ein Datensatz von Daten zur Darstellung des Anzeigeelements erzeugt werden muss, nämlich der Datensatz, der Daten zur Darstellung des Anzeigeelements auf der fahrzeugseitigen Anzeigeeinrichtung umfasst. Dieser Datensatz kann zur Ansteuerung beider Anzeigeeinrichtungen verwendet werden. Da davon ausgegangen werden kann, dass ein Fahrzeugführer oder weitere Insassen bei einer Anzeige von Anzeigeelementen durch die fahrzeugseitige Anzeigeeinrichtung nicht oder nur wenig auf die endgeräteseitige Anzeigeeinrichtung schauen werden, kann auch davon ausgegangen werden, dass sich wenig Irritationen ergeben. Jedoch wird in vorteilhafter Weise eine Rechenzeit und eine erzeugte Datenmenge reduziert.

In einer weiteren Ausführungsform wird das Anzeigeelement auf der endgeräteseitigen Anzeigeeinrichtung mit einer absoluten Pixelanzahl des auf der fahrzeugseitigen Anzeigeeinrichtung anzuzeigenden Anzeigeelements dargestellt. Dies wurde vorhergehend bereits erläutert.

Weiter vorgeschlagen wird eine Anordnung zur Darstellung eines Anzeigeelements auf mindestens einer fahrzeugseitigen Anzeigeeinrichtung. Die Anordnung umfasst mindestens ein Endgerät und mindestens eine fahrzeugseitige Anzeigeeinrichtung. Weiter kann die Anordnung eine endgeräteseitige Anzeigeeinrichtung und Steuereinrichtung zur Ansteuerung der fahrzeugseitigen Anzeigeeinrichtung sowie eine Steuereinrichtung zur Ansteuerung der endgeräteseitigen Anzeigeeinrichtung umfassen.

Daten zur Darstellung des Anzeigeelements sind von dem Endgerät bereitstellbar. Weiter ist eine Datenverbindung zwischen dem Endgerät und einem Fahrzeug herstellbar. Weiter sind Daten zur Darstellung des Anzeigeelements von dem Endgerät zum Fahrzeug übertragbar.

Weiter ist eine Größeninformation über eine Größe der fahrzeugseitigen Anzeigeeinrichtung an das Endgerät übertragbar, wobei endgeräteseitig die Daten zur Darstellung des Anzeigeelements in Abhängigkeit der übertragenen Größeninformationen bereitstellbar sind.

Hierdurch ergibt sich in vorteilhafter Weise eine Anordnung, die die Durchführung eines der vorhergehend erläuterten Verfahren ermöglicht.

Weiter ist dem Anzeigeelement endgeräteseitig eine vorbestimmte dichteunabhängige Pixelanzahl zuordenbar. Erfindungsgemäß ist eine absolute Pixelanzahl des auf der fahrzeugseitigen Anzeigeeinrichtung darzustellenden Anzeigeelements in Abhängigkeit der dichteunabhängigen Pixelanzahl und der übertragenen Größeninformation bestimmbar.

Die Erfindung wird anhand eines Ausführungsbeispiels näher erläutert. Die einzige Figur zeigt ein schematisches Blockschaltbild einer erfindungsgemäßen Anordnung.

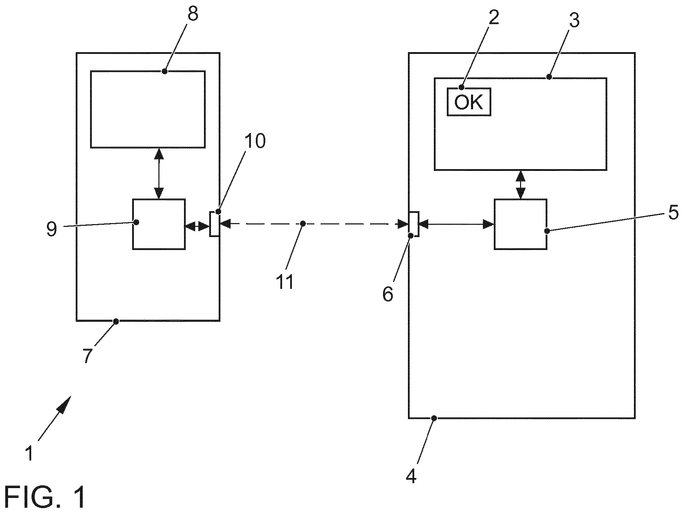

Fig. 1 zeigt schematisch ein Blockschaltbild einer Anordnung 1 zur Darstellung eines Anzeigeelements 2 auf einer fahrzeugseitigen Anzeigeeinrichtung 3. Hierzu umfasst ein Fahrzeug 4 die fahrzeugseitige Anzeigeeinrichtung 3, eine fahrzeugseitige Steuereinrichtung 5 und eine fahrzeugseitige Sende- und Empfangseinrichtung 6.

Weiter dargestellt ist ein Endgerät 7. Das Endgerät 7 umfasst eine endgeräteseitige Anzeigeeinrichtung 8, eine endgeräteseitige Steuereinrichtung 9 und eine endgeräteseitige Sende- und Empfangseinrichtung 10.

Die fahrzeugseitige Steuereinrichtung 5 erzeugt Signale zur Ansteuerung der fahrzeugseitigen Anzeigeeinrichtung 3, die u.a. zur Anzeige des Anzeigeelements 2 führen.

Entsprechend erzeugt die endgeräteseitige Steuereinrichtung 9 Signale zur Ansteuerung der endgeräteseitigen Anzeigeeinrichtung 8.

Weiter dargestellt ist, dass das Endgerät 7 und das Fahrzeug 4 über eine drahtlose Verbindung 11, die beispielsweise als sogenannte MirrorLink-Verbindung ausgebildet sein kann, verbunden werden oder sind.

Ein Applikationsentwickler kann eine Applikation, beispielsweise in Form eines Programms, für das Betriebssystem des Endgeräts 7 entwickeln. Hierbei kann er auch eine Anzeige von während der Applikation anzuzeigenden Anzeigeelementen planen. Eine Größe, insbesondere eine Darstellungsgröße, der anzuzeigenden Anzeigeelemente kann er beispielsweise durch eine dichteunabhängige Pixelanzahl kodieren, wobei einem Anzeigeelement eine vorbestimmte dichteunabhängige Pixelanzahl, beispielsweise in horizontaler und vertikaler Bildrichtung, zugeordnet wird. Ja nach Auflösung der endgeräteseitigen Anzeigeeinrichtung 8 kann dann die Steuereinrichtung 9 eine absolute Pixelanzahl des auf der endgeräteseitigen Anzeigeeinrichtung 8 anzuzeigenden Anzeigeelements, in Abhängigkeit der dichteunabhängigen Pixelanzahl, bestimmen.

Zur Durchführung des erfindungsgemäßen Verfahrens können das Endgerät 7 und das Fahrzeug 4 über die Datenverbindung 11 verbunden werden. Hierzu kann sowohl die endgeräteseitige Steuereinrichtung 9 mit der endgeräteseitigen Sende- und Empfangseinrichtung 10 als auch die fahrzeugseitige Steuereinrichtung 5 mit der fahrzeugseitigen Sende- und Empfangseinrichtung 6 verbunden werden oder sein. Weiter kann davon ausgegangen werden, dass die endgeräteseitige Anzeigeeinrichtung 8 und die fahrzeugseitige Anzeigeeinrichtung 3 verschiedene Auflösungen und Seitenverhältnisse aufweisen.

Das Endgerät 7 kann detektieren, dass ein Fahrzeug 4 mit einer fahrzeugseitigen Anzeigeeinrichtung 3 mit dem Endgerät 7 datentechnisch verbunden ist. Hiernach kann das Fahrzeug 4 Informationen zu einer physikalischen Größe der fahrzeugseitigen Anzeigeeinrichtung 3, insbesondere zu einer Breite und einer Höhe, an das Endgerät 8 übertragen. Dies kann z.B. über einen Mechanismus erfolgen, der in der vorhergehend erläuterten MirrorLink-Verbindung spezifiziert ist. Dies kann z.B. auf Anfrage des Endgeräts 7 erfolgen. Die Anfrage kann beispielsweise erfolgen, falls die Verbindung des Endgeräts 7 mit dem Fahrzeug 4 detektiert wird.

Nach Empfang dieser Größeninformation kann die Steuereinrichtung 9 des Endgeräts 7 eine absolute Pixelanzahl des auf der fahrzeugseitigen Anzeigeeinrichtung 3 darzustellenden Anzeigeelements 2 in Abhängigkeit der Größe, der dichteunabhängigen Pixelanzahl, einer Referenzskalierungsgröße und einer Auflösung der endgeräteseitigen Anzeigeeinrichtung 8 berechnen. Auf Grundlage dieser berechneten absoluten Pixelanzahl können dann Daten zur Darstellung des Anzeigeelements 2 auf der fahrzeugseitigen Anzeigeeinrichtung 3 durch das endgeräteseitige Steuergerät 9 erzeugt und über die Datenverbindung 11 an das Fahrzeug 4 übertragen werden. In Abhängigkeit der übertragenen Daten steuert die fahrzeugseitige Steuereinrichtung 5 die Anzeigeeinrichtung 3 derart an, dass das Anzeigeelement 2 mit der endgeräteseitig berechneten absoluten Pixelanzahl angezeigt wird. Gleichzeitig kann auch das endgeräteseitige Steuergerät 9 die endgeräteseitige Anzeigeeinrichtung 8 derart ansteuern, dass das Anzeigeelement 2 dort mit der an die fahrzeugseitige Anzeigeeinrichtung 3 angepassten absoluten Pixelanzahl angezeigt wird.

Hiermit ist eine Projektion des Anzeigeelements 2 auf eine Größe der fahrzeugseitigen Anzeigeeinrichtung 3 angepasst und das Anzeigeelement 2 hat eine angemessene Größe.

Die Erfindung bietet in vorteilhafter Weise einem Applikationsentwickler eine Erleichterung bei der Entwicklung von Applikationsoberflächen, die auf der entfernten Anzeigeeinrichtung, also nicht-endgeräteseitigen Anzeigeeinrichtungen, angezeigt werden sollen und dort mit einer gewünschten Größe dargestellt werden sollen. Eine Berechnung der absoluten Pixelanzahl für die Darstellung auf derartigen Anzeigeeinrichtungen erfolgt hierbei durch das Endgerät 7, insbesondere ein Betriebssystem des Endgeräts 7. Vorzugsweise erfolgt die Berechnung erst dann, wenn das Endgerät 7 mit einer weiteren Einrichtung, die die Anzeigeeinrichtung aufweist, verbunden wird.

## Bezugszeichenliste

1 Anordnung
2 Anzeigeelement
3 fahrzeugseitige Anzeigeeinrichtung
4 Fahrzeug
5 fahrzeugseitige Steuereinrichtung
6 fahrzeugseitige Sende- und Empfangseinrichtung
7 Endgerät
8 endgeräteseitige Anzeigeeinrichtung
9 endgeräteseitige Steuereinrichtung
10 endgeräteseitige Sende- und Empfangseinrichtung
11 Datenverbindung

## Patentansprüche

1. Verfahren zur Darstellung eines Anzeigeelements (2) auf mindestens einer fahrzeugseitigen Anzeigeeinrichtung (3), die fest in einem Fahrzeug verbaut ist,

   wobei Daten zur Darstellung des Anzeigeelements (2) von einem Endgerät (7) bereitgestellt werden, wobei das Endgerät (7) ein von dem Fahrzeug baulich getrennt ausgebildetes Endgerät (7) ist, wobei eine Datenverbindung (11) zwischen einem Endgerät (7) und einem Fahrzeug (4) hergestellt wird, wobei Daten zur Darstellung des Anzeigeelements (2) von dem Endgerät (7) zu dem Fahrzeug (4) übertragen werden, wobei eine Größeninformation über eine Größe der fahrzeugseitigen Anzeigeeinrichtung (3) an das Endgerät (7) übertragen wird, wobei endgeräteseitig die Daten zur Darstellung des Anzeigeelements (2) in Abhängigkeit der übertragenen Größeninformation bereitgestellt werden, wobei dem Anzeigeelement (2) endgeräteseitig eine vorbestimmte dichteunabhängige Pixelanzahl zugeordnet ist,

**dadurch gekennzeichnet, dass**

die Größeninformation eine Information über eine physikalische Größe der fahrzeugseitigen Anzeigeeinrichtung ist, wobei eine absolute Pixelanzahl des auf der fahrzeugseitigen Anzeigeeinrichtung (3) darzustellenden Anzeigeelements (2) in Abhängigkeit der dichteunabhängigen Pixelanzahl und der übertragenen Größeninformation bestimmt wird.

2. Verfahren nach Anspruch 1, **dadurch gekennzeichnet, dass** die absolute Pixelanzahl in Abhängigkeit der dichteunabhängigen Pixelanzahl, einer Referenzskalierungsgröße und einem Auflösungs-Größe-Verhältnis bestimmt wird, wobei das Auflösungs-Größe-Verhältnis ein Verhältnis zwischen einer Auflösung einer endgeräteseitigen Anzeigeeinrichtung (8) und der Größe der fahrzeugseitigen Anzeigeeinrichtung (3) ist.

3. Verfahren nach Anspruch 2, **dadurch gekennzeichnet, dass** das Auflösungs-Größe-Verhältnis als ein Verhältnis zwischen einer vertikalen Auflösung der endgeräteseitigen Anzeigeeinrichtung (8) und der Höhe der fahrzeugseitigen Anzeigeeinrichtung (3) bestimmt wird, falls ein Verhältnis der Breite zur Höhe der endgeräteseitigen Anzeigeeinrichtung (8) kleiner als ein Verhältnis der Breite zur Höhe der fahrzeugseitigen Anzeigeeinrichtung (3) ist.

4. Verfahren nach Anspruch 2 oder 3, **dadurch gekennzeichnet, dass** das Auflösungs-Größe-Verhältnis als ein Verhältnis zwischen einer horizontalen Auflösung der endgeräteseitigen Anzeigeeinrichtung (8) und der Breite der fahrzeugseitigen Anzeigeeinrichtung (3) bestimmt wird, falls ein Verhältnis der Breite zur Höhe der endgeräteseitigen Anzeigeeinrichtung (8) größer als ein oder gleich einem Verhältnis der Breite zur Höhe der fahrzeugseitigen Anzeigeeinrichtung (3) ist.

5. Verfahren nach einem der vorangegangenen Ansprüche, **dadurch gekennzeichnet, dass** das Endgerät (7) ein mobiles Endgerät ist.

6. Verfahren nach einem der vorangegangenen Ansprüche, **dadurch gekennzeichnet, dass** das Anzeigeelement (2) zeitgleich auf einer endgeräteseitigen Anzeigeeinrichtung (8) dargestellt wird.

7. Verfahren nach Anspruch 6, **dadurch gekennzeichnet, dass** das Anzeigeelement (2) auf der endgeräteseitigen Anzeigeeinrichtung (8) mit einer absoluten Pixelanzahl des auf der fahrzeugseitigen Anzeigeeinrichtung (3) anzuzeigenden Anzeigeelements (2) dargestellt wird.

8. Anordnung zur Darstellung eines Anzeigeelements (2) auf mindestens einer fahrzeugseitigen Anzeigeeinrichtung (3), die fest in einem Fahrzeug verbaut ist, wobei die Anordnung (1) mindestens ein Endgerät (7) und mindestens eine fahrzeugseitige Anzeigeeinrichtung (3) umfasst,

wobei Daten zur Darstellung des Anzeigeelements (2) von dem Endgerät (7) bereitstellbar sind, wobei das Endgerät (7) ein von dem Fahrzeug baulich getrennt ausgebildetes Endgerät (7) ist, wobei eine Datenverbindung zwischen dem Endgerät und einem Fahrzeug (4) herstellbar ist, wobei Daten zur Darstellung des Anzeigeelements (2) von dem Endgerät (7) zum Fahrzeug (4) übertragbar sind, wobei eine Größeninformation über einer Größe der fahrzeugseitigen Anzeigeeinrichtung (3) an das Endgerät (7) übertragbar ist, wobei endgeräteseitig die Daten zur Darstellung des Anzeigeelements (2) in Abhängigkeit der übertragenen Größeninformation bereitstellbar sind, wobei dem Anzeigeelement (2) endgeräteseitig eine vorbestimmte dichteunabhängige Pixelanzahl zuordenbar ist, **dadurch gekennzeichnet, dass**

die Größeninformation eine Information über eine physikalische Größe der fahrzeugseitigen Anzeigeeinrichtung ist, wobei eine absolute Pixelanzahl des auf der fahrzeugseitigen Anzeigeeinrichtung (3) darzustellenden Anzeigeelements (2) in Abhängigkeit der dichteunabhängigen Pixelanzahl und der übertragenen Größeninformation bestimmbar ist.

# EP 3 058 547 B1

## Claims

1. Method for presenting a display element (2) on at least one vehicle-side display device (3) which is permanently installed in a vehicle,

   wherein data for presenting the display element (2) are provided by a terminal (7), wherein the terminal (7) is a terminal (7) designed structurally separately from the vehicle, wherein a data connection (11) is established between a terminal (7) and a vehicle (4), wherein data for presenting the display element (2) are transmitted from the terminal (7) to the vehicle (4),
   wherein size information about a size of the vehicle-side display device (3) is transmitted to the terminal (7), wherein the data for presenting the display element (2) is transmitted on the part of the terminal depending on the transmitted size information, wherein a predetermined, density-independent number of pixels is associated with the display element (2) on the terminal side,
   **characterized in that**
   the size information is information about a physical size of the display device on the vehicle side, wherein an absolute number of pixels of the display element (2) to be presented at the vehicle-side display device (3) is determined depending on the density-independent number of pixels and the transmitted size information.

2. Method according to claim 1, **characterized in that** the absolute number of pixels is determined depending on the density-independent number of pixels, a reference scaling size, and a resolution/size ratio, wherein the resolution/size ratio is a ratio between a resolution of a terminal-side display device (8) and the size of the vehicle-side display device (3).

3. Method according to claim 2, **characterized in that** the resolution/size ratio is specified as a ratio between a vertical resolution of the terminal-side display device (8) and the height of the vehicle-side display device (3), in the event that a ratio of width to height of the terminal-side display device (8) is less than a ratio of width to height of the vehicle-side display device (3).

4. Method according to claim 2 or 3, **characterized in that** the resolution/size ratio is specified as a ratio between a horizontal resolution of the terminal-side display device (8) and the width of the vehicle-side display device (3), if a ratio of width to height of the terminal display device (8) is greater than one or equal to a ratio of width to height of the vehicle-side display device (3).

5. Method according to any one of the preceding claims, **characterized in that** the terminal (7) is a mobile terminal.

6. Method according to any one of the preceding claims, **characterized in that** the display element (2) is presented at the same time on a terminal-side display device (8).

7. Method according to claim 6, **characterized in that** the display element (2) is displayed on the terminal-side display device (8) with an absolute number of pixels of the display element (2) to be presented on the vehicle-side display device (3).

8. Arrangement for presenting a display element (2) on at least one vehicle-side display device (3) which is permanently installed in a vehicle, wherein the arrangement (1) comprises at least one terminal (7) and at least one vehicle-side display device (3),

   wherein data for presenting the display element (2) can be provided by the terminal (7), wherein the terminal (7) is a terminal (7) designed to be structurally separate from the vehicle, wherein a data connection between the terminal and a vehicle (4) can be established, wherein data for presenting the display element (2) can be transmitted from the terminal (7) to the vehicle (4), wherein size information about a size of the vehicle-side display device (3) can be transmitted to the terminal (7), wherein the data for presenting the display element (2) can be provided on the terminal side depending on the transmitted size information, wherein a predetermined, density-independent number of pixels can be associated with the display element (2) on the terminal side,
   **characterized in that**
   the size information is information about a physical size of the display device on the vehicle side, wherein an absolute number of pixels of the display element (2) to be presented on the vehicle-side display device (3) can be specified depending on the density-independent number of pixels and the transmitted size information.

**Revendications**

1. Procédé de représentation d'un élément d'affichage (2) sur au moins un dispositif d'affichage (3) côté véhicule, lequel est monté de manière fixe dans le véhicule,

   des données de représentation de l'élément d'affichage (2) étant fournies par un dispositif terminal (7), le dispositif terminal (7) étant un dispositif terminal (7) construit séparément du véhicule, une connexion de données (11) étant établie entre un dispositif terminal (7) et un véhicule (4), des données de représentation de l'élément d'affichage (2) étant transmises du dispositif terminal (7) au véhicule (4),
   des informations de taille concernant une taille du dispositif d'affichage (3) côté véhicule étant transmises au dispositif terminal (7), des données de représentation de l'élément d'affichage (2) étant fournies en fonction des informations de taille transmises, un nombre de pixels prédéfini indépendant de la densité étant associé côté dispositif terminal à l'élément d'affichage (2),
   **caractérisé en ce que**
   les informations de taille sont des informations concernant une taille physique du dispositif d'affichage côté véhicule, un nombre de pixels absolu de l'élément d'affichage (2) à représenter sur le dispositif d'affichage (3) côté véhicule étant déterminé en fonction du nombre de pixels indépendant de la densité et des informations de taille transmises.

2. Procédé selon la revendication 1, **caractérisé en ce que** le nombre de pixels absolu en fonction du nombre de pixels indépendant de la densité, une grandeur de mise à l'échelle de référence et un rapport résolution-taille étant déterminés, le rapport résolution-taille étant un rapport entre une résolution d'un dispositif d'affichage (8) côté dispositif terminal et la taille du dispositif d'affichage (3) côté véhicule.

3. Procédé selon la revendication 2, **caractérisé en ce que** le rapport résolution-taille est déterminé en tant qu'un rapport entre une résolution verticale du dispositif d'affichage (8) côté dispositif terminal et la hauteur du dispositif d'affichage (3) côté véhicule, si un rapport largeur-hauteur du dispositif d'affichage (8) côté dispositif terminal est inférieur à un rapport largeur-hauteur du dispositif d'affichage (3) côté dispositif véhicule.

4. Procédé selon la revendication 2 ou 3, **caractérisé en ce que** le rapport résolution-taille est déterminé en tant qu'un rapport entre une résolution horizontale du dispositif d'affichage (8) côté dispositif terminal et la largeur du dispositif d'affichage (3) côté véhicule, si un rapport largeur-hauteur du dispositif d'affichage (8) côté dispositif terminal est supérieur ou égal à un rapport largeur-hauteur du dispositif d'affichage (3) côté dispositif véhicule.

5. Procédé selon l'une quelconque des revendications précédentes, **caractérisé en ce que** le dispositif terminal (7) est un dispositif terminal mobile.

6. Procédé selon l'une quelconque des revendications précédentes, **caractérisé en ce que** l'élément d'affichage (2) est représenté simultanément sur un dispositif d'affichage (8) côté dispositif terminal.

7. Procédé selon la revendication 6, **caractérisé en ce que** l'élément d'affichage (2) est représenté sur le dispositif d'affichage (8) côté dispositif terminal avec un nombre de pixels absolu de l'élément d'affichage (2) devant être représenté sur le dispositif d'affichage (3) côté véhicule.

8. Ensemble de représentation d'un élément d'affichage (2) sur au moins un dispositif d'affichage (3) côté véhicule, lequel est monté de manière fixe dans un véhicule, l'ensemble (1) comprenant au moins un dispositif terminal (7) et au moins un dispositif d'affichage (3) côté véhicule,

   des données de représentation de l'élément d'affichage (2) pouvant être fournies par le dispositif terminal (7), le dispositif terminal (7) étant un dispositif terminal (7) construit séparément du véhicule, une connexion de données pouvant être établie entre le dispositif terminal et un véhicule (4), des données de représentation de l'élément d'affichage (2) pouvant être transmises du dispositif terminal (7) au véhicule (4), des informations de taille concernant une taille du dispositif d'affichage (3) côté véhicule pouvant être transmises au dispositif terminal (7), des données de représentation de l'élément d'affichage (2) pouvant être fournies en fonction des informations de taille transmises, un nombre de pixels prédéfini indépendant de la densité étant associé côté dispositif terminal à l'élément d'affichage (2),
   **caractérisé en ce que**
   les informations de taille sont des informations concernant une taille physique du dispositif d'affichage côté véhicule, un nombre de pixels absolu de l'élément d'affichage (2) à représenter sur le dispositif d'affichage (3) côté véhicule pouvant être déterminé en fonction du nombre de pixels indépendant de la densité et des informations de taille transmises.

FIG. 1

**EP 3 058 547 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2013048168 A2
- DE 102001112445 A1
- WO 2013135815 A1
- US 2009209198 A1
- US 2004046772 A1

**In der Beschreibung aufgeführte Nicht-Patentliteratur**

- **FENG YUAN.** Graphics Device Abstraction, Internet Citation. 22. Dezember 2000, 1-10
- *Module 4: The Graphics Device Interface (GDI), Colors, and Fonts,* 14. April 2016, http://te-nouk.com/download/pdf/visualcplusmfc4.pdf
- **ANONYMOUS.** *Supporting Multiple Screens I Android Developers,* 17. Mai 2011, URL:http://developer.android.com/guide/practices/screens_support.html